# EUROPEAN PATENT SPECIFICATION

(11) **EP 1 898 567 B1**
(45) Date of publication and mention of the grant of the patent: **26.11.2008**
(21) Application number: 06122308.7
(22) Date of filing: 13.10.2006
(51) Int. Cl.: H04L 12/56

(54) **System and method for determining that a maximum number of IP sessions has been established**
System zur Feststellung des Erreichens der maximalen Anzahl hergestellter IP-Verbindungen und ein dazugehöriges Verfahren
Système et procédé destinés à déterminer que le nombre maximum de sessions IP a été établi

(30) Priority: 24.08.2006 US 823427 P
(43) Date of publication of application: 12.03.2008
(73) Proprietor: Research In Motion Limited, Waterloo, Ontario N2L 3W8 (CA)
(72) Inventor: Wirtanen, Jeff, Kanata, Ontario K2K 2L9 (CA); Kim, Jin, Ottawa, Ontario K1Y 4S3 (CA); Islam, Khaledul M., Ottawa, Ontario K2K 3N4 (CA); Plestid, Trevor, Ottawa, Ontario K2B 5Z4 (CA)
(74) Representative: Rickard, David John

(56) References cited:
- JP-A- 2004 187 094
- JP-A- 2004 246 833
- US-A1- 2002 174 220
- US-B1- 6 430 619
- 3GPP TSG CORE NETWORK AND TERMINALS: "Mobile radio interface Layer 3 specification; Core network protocols; Stage 3" 3GPP TS 24.008 V7.4.0, [Online] June 2006 (2006-06), pages 1,35-161,206-229,284-318,421-477,502-521, XP002408953 Retrieved from the Internet: URL:http://www.3gpp.org/ftp/Specs/archive/ 24_series/24.008/24008-740.zip> [retrieved on 2006-11-24]

## Description

The application relates generally to wireless communication, and more particularly to IP sessions.

Communications between a mobile device and a corresponding node are processed in a UMTS (Universal Mobile Telecommunications System) network through GPRS (General Packet Radio Service) serving nodes. The GPRS serving nodes include an SGSN (Serving GPRS Support Node) and a GGSN (Gateway GPRS Support Node). Such communication exchange between the mobile device and the corresponding node involve communication exchange between the mobile device and the SGSN. Communication exchanges such as user plane communication (i.e. IP data traffic) between the mobile device and the SGSN node use one or more PDP contexts.
There may be many PDP contexts depending on how many different applications of the mobile device are communicating over PDP contexts. However, the number of PDP contexts for the mobile device may be limited by the number of PDP contexts supported in the routing area in which the mobile device resides.

Different routing areas may support different numbers of PDP contexts. However, the mobile device is unaware of how many PDP contexts a given routing area supports for the mobile device. This can lead to undesirable situations. For instance, the mobile device might request a new PDP context to be established while unaware that a maximum number of IP sessions is already established. Therefore, the mobile device will be unsuccessful in establishing the new PDP context. Furthermore, in some instances, the mobile device is unaware of why establishing the new PDP context is unsuccessful. If the mobile device is unaware of the maximum number of IP sessions supported for the mobile device, then the mobile device cannot properly manage PDP contexts. If more services using a PDP context are requested by the user than are supported by network then there may be some sort of multiplexing of which some services are delayed, etc.

A possible approach is for the mobile device to always assume that only one PDP context is supported. However, this approach does not take advantage of when additional PDP contexts are supported. This may result in unhappy users on networks that supported more than one PDP context.

US-A-6430619 discloses a data communications network with a plurality of point of presence servers. A central database contains a maximum number of virtual private network sessions to provide to a group of users. Actions are then taken when the group attempts to exceed this maximum. This is a commercial decision and is not concerned with the ability of a network to support only a maximum number of users.

### General

According to a broad aspect, there may be provided a method in a mobile device comprising: transmitting at least one request of a predefined type; receiving an indication that a given request of the at least one request cannot be fulfilled because a maximum number of IP sessions is already established for the mobile device; determining the maximum number of IP sessions supported for the mobile device in a given network area as being the number of IP sessions established for the mobile device when the indication is received; and having determined the maximum number of IP sessions supported for the mobile device in the given network area, actively managing (5-2,11-1) allocation of IP sessions where there are fewer IP sessions than there are device functions that need IP sessions, with regard to the maximum number of IP sessions supported.

According to another broad aspect, there may be provided a computer readable medium having stored thereon instructions executable on a processor so as to implement all of the steps of any of the methods summarised above.

According to another broad aspect, there may be provided a mobile device comprising: a wireless access radio adapted to communicate with a wireless network; and an IP session management function adapted to: transmit at least one request of a predefined type; receive an indication that a request of the at least one request cannot be fulfilled because a maximum number of IP sessions is already established for the mobile device; determine the maximum number of IP sessions supported for the mobile device in a given network area as being the number of IP sessions established for the mobile device when the indication is received; and having determined the maximum number of IP sessions supported for the mobile device in the given network area, actively manage (5-2,11-1) allocation of IP sessions where there are fewer IP sessions than there are device functions that need IP sessions, with regard to the maximum number of IP sessions supported.

According to another broad aspect, there may be provided a method in a wireless network comprising: upon receiving from a mobile device residing in a given network area a request of a predefined type: determining whether there is a maximum number of IP sessions already established for the mobile device for the given network area; and if the maximum number of IP sessions is already established, transmitting to the mobile device a response indicating that the request cannot be fulfilled because the maximum number of IP sessions is already established.

According to another broad aspect, there may be provided a computer readable medium having computer executable instructions stored thereon for execution on a processor so as to implement the method summarised above.

According to another broad aspect, there may be provided a wireless network comprising an IP session function adapted to: upon receiving from a mobile device residing in a given network area a request of a predefined type: determine whether there is a maximum number of IP sessions already established for the mobile device for the given network area; and if the maximum number of IP sessions is already established, transmit to the mobile device a response indicating that the request cannot be fulfilled because the maximum number of IP sessions is already established.

### Brief Description of the Drawings

Embodiments will now be described with reference to the attached drawings in which:
Figure 1A is a block diagram of an example wireless network and a mobile device;
Figure 1B is a block diagram of the mobile device shown in Figure 1A;
Figure 1C is a block diagram of another mobile device;
Figure 2 is a flowchart of an example method of determining that the maximum number of IP sessions is already established;
Figures 3A and 3B are tables of an example GMM cause information element;
Figures 4A and 4B are tables of an example SM cause information element;
Figures 5 through 7 are flowcharts of example methods of managing IP sessions based on the maximum number of IP sessions that can be supported for the mobile device; and
Figure 8 is a flowchart of a method of determining the number of supported PDP contexts;
Figure 9 is a flowchart of a method of maintaining history information;
Figure 10 is a table of an example format in which the history information may be maintained;
Figure 11 is a flowchart of an example method of managing IP sessions; and
Figure 12 is a flowchart of an example method of transmitting a response indicating that a request cannot be fulfilled because the maximum number of IP sessions is already established;

### Description of Preferred Embodiments

### Wireless Communication System

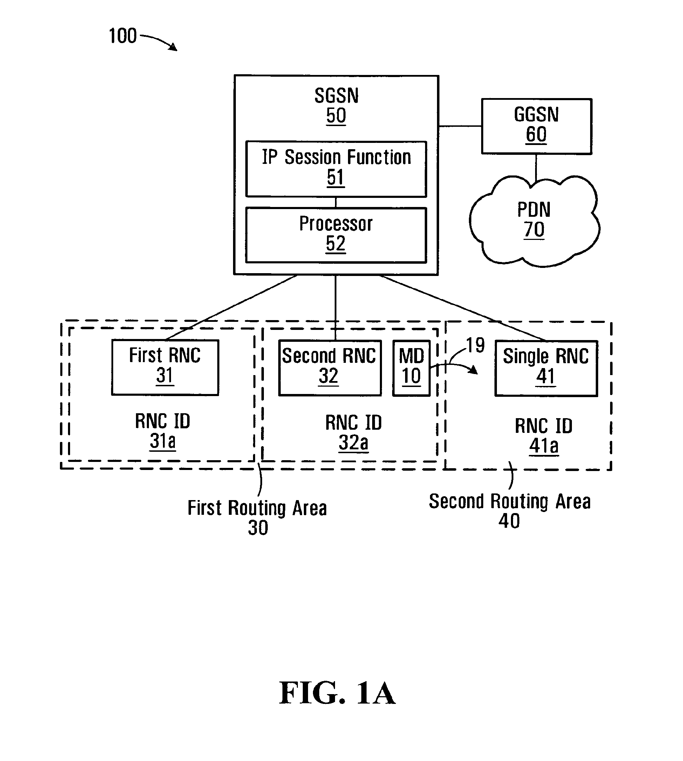

Referring now to Figure 1A, shown is a block diagram of an example wireless network 100 and a mobile device 10. The wireless network 100 has a first routing area 30 and a second routing area 40. There may be other routing areas, but they are not shown for simplicity. Each routing area has at least one RNC (Radio Network Controller). In the illustrated example, the first routing area 30 has a first RNC 31 and a second RNC 32 while the second routing area 40 has a single RNC 41. Each RNC 31,32,41 is associated with a respective RNC Id. The first RNC 31 and the second RNC 32 of the first routing area 30 have an RNC Id 31a and an RNC Id 32a, respectively, while the single RNC 41 of the second routing area 40 has an RNC Id 41a. Each cell (not shown) within an RNC (via a Node B) is associated with an RAI (Routing Area Identification) in a hierarchal fashion. An RAI may include one or more cells and span across RNCs. In some implementations, each RAI is a combination of a country code, a network code, and a routing area code. RAIs may differ for other wireless networks.

In the illustrated example, each RNC 31,32,41 is coupled to an SGSN (Serving General Packet Radio Service Support Node) 50, which in turn is coupled to a GGSN (Gateway GPRS Support Node) 60, which in turn is coupled to a PDN (Packet Data Network) 70. The PDN 70 may for example be an Internet. The SGSN 50 has an IP session function 51 coupled to a processor 52 and may have other components, but they are not shown for simplicity.

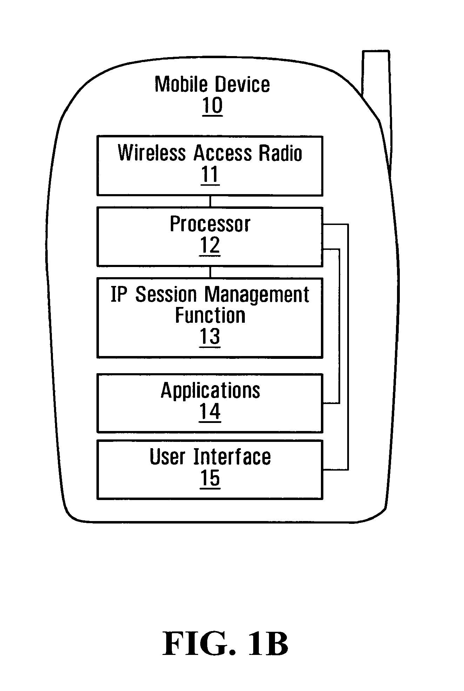

The wireless network 100 is shown with a single mobile device, namely the mobile device 10. There may be other mobile devices, but they are not shown for simplicity. With reference to Figure 1B, shown is a block diagram of the mobile device 10 shown in Figure 1A. The mobile device 10 has a processor 12, which is coupled to a wireless access radio 11, an IP session management function 13, applications 14, and a user interface 15. The mobile device 10 may have other components, but they are not shown for sake of simplicity. With reference back to Figure 1A, the mobile device 10 is currently positioned within the first routing area 31. However, the mobile device 10 may move to another routing area such as the second routing area 40 as indicated by a moving arrow 19.

In operation, the mobile device 10 is adapted to communicate with the wireless network 100 using its wireless access radio 11. Such communication may for example be voice communication, electronic messaging, or any other appropriate form of communication supported by the applications 14. At least some communication with the wireless network 100 is over one or more IP sessions between the mobile device 10 and the SGSN 50. A PDP (Packet Data Protocol) session is an example of an IP session. There may be many IP sessions between the mobile device 10 and the SGSN 50 depending on how many of the applications 14 have an established IP session. However, the number of IP sessions is typically limited by the routing area in which the mobile device 10 resides, which is currently the first routing area 30.

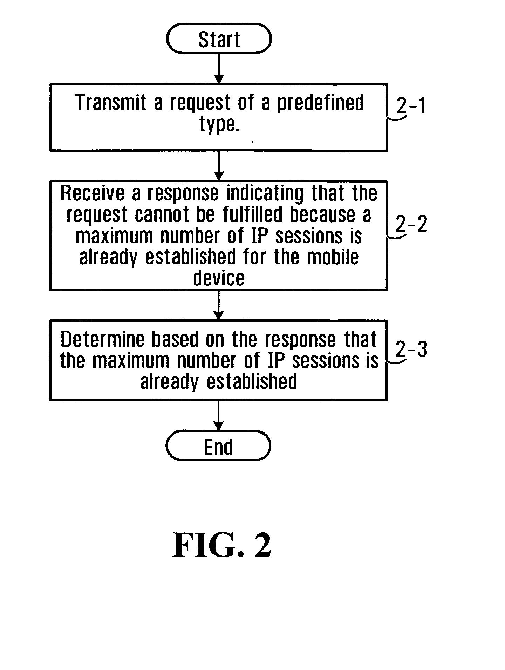

There are instances when the mobile device 10 transmits a request of a predefined type such as an Activate IP Session Request or an IP Session Service Request. The wireless network 100 receives the request and determines whether there is a maximum number of IP sessions already established for the mobile device 10. According to an embodiment of the application, the IP session function 51 implements a method in the wireless network 100 so that in the event that the maximum number of IP sessions is already established for the mobile device 10, the wireless network 100 transmits a response indicating that the request cannot be fulfilled because the maximum number of IP sessions is already established. The mobile device 10 receives the response. According to another embodiment of the application, the IP session management function 13 implements a method in the mobile device 10 so as to determine based on the response that the maximum number of IP sessions is already established. This allows the mobile device 10 to determine the maximum number of IP sessions that can be supported so that IP sessions can be managed by the mobile device 10 accordingly. Further details are provided below with reference to Figures 2 through 11.

In the illustrated example, it is assumed that within each routing area the same number of IP sessions is supported for the mobile device 10 regardless of how many RNCs are present. Typically a routing area has a single RNC, such is the case with the second routing area 40. The number of IP sessions supported for a given mobile device is currently limited by the RNC. Therefore, while the limiting factor is actually the RNC, the routing area can typically be regarded as the limiting factor. However, a routing area might have more than one RNC, such is the case with the first routing area 30. Therefore, it is possible for a routing area to support a different number of PDP contexts for a mobile device depending on where in the routing area the mobile device resides. This is the case in which the routing area cannot be regarded as the limiting factor. While the examples presented herein refer to "routing areas" as limiting the number of IP sessions for a mobile device, it is to be understood that more generally an "area" of the network limits the number of IP sessions for the mobile device. The "area" may be a routing area, a portion of a routing area as defined for example by an RNC Id, a network, a cell id, or any other area in which the number of IP sessions supported for a mobile device is limited.

In some implementations, there are subtleties between the Connected/Active state (CELL_DCH, CELL_FACH) and the Idle state (CELL_PCH, URA_PCH, IDLE) for the mobile device. The routing area is known to the mobile device while in the Idle state; however, the RNC id is typically not known. While in the Idle state, a mobile device moves to the Connected/Active state in order to find out its serving RNC id. This may waste battery life, etc. Therefore, in some implementations, the number of IP sessions supported is considered for a routing area irrespective of whether this is the lowest level of granularity.

There are many possibilities for the IP session management function 13 of the mobile device 10. In the illustrated example, the IP session management function 13 is implemented as software and is executed on the processor 12. However, more generally, the IP session management function 13 may be implemented as software, hardware, firmware, or any appropriate combination thereof. In the illustrated example, the IP session management function 13 is shown as a single component. However, more generally, the IP session management function 13 may be implemented as one or more components. An example in which the IP session management function 13 includes more than one component is described below.

In some implementations, the IP session management function 13 includes a NAS (Non Access Stratum) and an AS (Access Stratum). The NAS includes a session management layer and manages IP sessions. The NAS may for example initiate an Activate PDP context request message to be sent to the SGSN 50. The AS manages an air interface of the wireless access radio 11 and includes a respective RAB (Radio Access Bearer) for each active IP session. An RAB is an identifier for an RF (Radio Frequency) pipe. There may be dormant IP sessions without respective RABs. The AS may for example initiate a service request message to be sent to the RNC.

There are many possibilities for the IP session function 51 of the wireless network 100. In the illustrated example, the IP session function 51 is implemented as software and is executed on the processor 52. However, more generally, the IP session function 51 may be implemented as software, hardware, firmware, or any appropriate combination thereof. In the illustrated example, the IP session function 51 is shown as a single component of the SGSN 50. However, more generally, the IP session function 51 may be implemented as one or more components and may be implemented as part of, or separate from, the SGSN 50. The one or more components may be distributed throughout the wireless network 100, or reside in a common location. Other implementations are possible.

There are many possibilities for the wireless network 100. In the illustrated example, the wireless network 100 is a UMTS (Universal Mobile Telecommunications System) network. However, more generally, the wireless network 100 may be any wireless network in which routing areas restrict how many IP sessions can be established for a given mobile device.

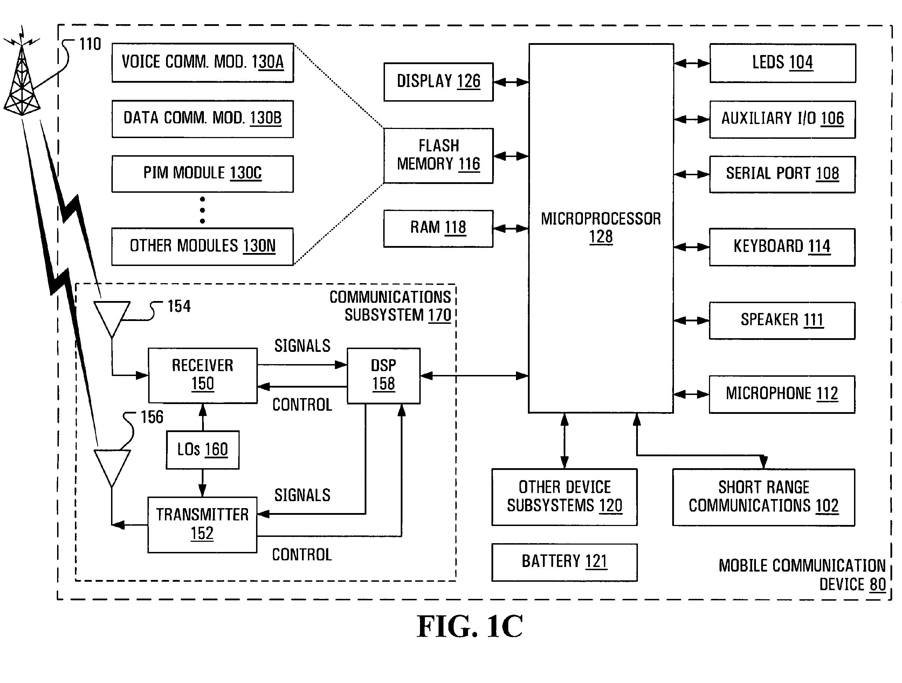

There are many possibilities for the mobile device 10. Referring now to Figure 1C, shown is a block diagram of another mobile device 80 that may implement any of the methods described herein. It is to be understood that the mobile device 80 is shown with very specific details for example purposes only.

A processing device (a microprocessor 128) is shown schematically as coupled between a keyboard 114 and a display 126. The microprocessor 128 controls operation of the display 126, as well as overall operation of the mobile device 80, in response to actuation of keys on the keyboard 114 by a user.

The mobile device 80 has a housing that may be elongated vertically, or may take on other sizes and shapes (including clamshell housing structures). The keyboard 114 may include a mode selection key, or other hardware or software for switching between text entry and telephony entry.

In addition to the microprocessor 128, other parts of the mobile device 80 are shown schematically. These include: a communications subsystem 170; a short-range communications subsystem 102; the keyboard 114 and the display 126, along with other input/output devices including a set of LEDS 104, a set of auxiliary I/O devices 106, a serial port 108, a speaker 111 and a microphone 112; as well as memory devices including a flash memory 116 and a Random Access Memory (RAM) 118; and various other device subsystems 120. The mobile device 80 may have a battery 121 to power the active elements of the mobile device 80. The mobile device 80 is in some embodiments a two-way radio frequency (RF) communication device having voice and data communication capabilities. In addition, the mobile device 80 in some embodiments has the capability to communicate with other computer systems via the Internet.

Operating system software executed by the microprocessor 128 is in some embodiments stored in a persistent store, such as the flash memory 116, but may be stored in other types of memory devices, such as a read only memory (ROM) or similar storage element. In addition, system software, specific device applications, or parts thereof, may be temporarily loaded into a volatile store, such as the RAM 118. Communication signals received by the mobile device 80 may also be stored to the RAM 118.

The microprocessor 128, in addition to its operating system functions, enables execution of software applications on the mobile device 80. A predetermined set of software applications that control basic device operations, such as a voice communications module 130A and a data communications module 130B, may be installed on the mobile device 80 during manufacture. In addition, a personal information manager (PIM) application module 130C may also be installed on the mobile device 80 during manufacture. The PIM application is in some embodiments capable of organizing and managing data items, such as e-mail, calendar events, voice mails, appointments, and task items. The PIM application is also in some embodiments capable of sending and receiving data items via a wireless network 110. In some embodiments, the data items managed by the PIM application are seamlessly integrated, synchronized and updated via the wireless network 110 with the device user's corresponding data items stored or associated with a host computer system. As well, additional software modules, illustrated as another software module 130N, may be installed during manufacture.

Communication functions, including data and voice communications, are performed through the communication subsystem 170, and possibly through the short-range communications subsystem 170. The communication subsystem 170 includes a receiver 150, a transmitter 152 and one or more antennas, illustrated as a receive antenna 154 and a transmit antenna 156. In addition, the communication subsystem 170 also includes a processing module, such as a digital signal processor (DSP) 158, and local oscillators (LOs) 160. The specific design and implementation of the communication subsystem 170 is dependent upon the communication network in which the mobile device 80 is intended to operate. For example, the communication subsystem 170 of the mobile device 80 may be designed to operate with the Mobitex™, DataTAC™ or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access CDMA, Personal Communications Service (PCS), Global System for Mobile Communications (GSM), etc. Other types of data and voice networks, both separate and integrated, may also be utilized with the mobile device 80.

Network access may vary depending upon the type of communication system. For example, in the Mobitex™ and DataTAC™ networks, mobile devices are registered on the network using a unique Personal Identification Number (PIN) associated with each device. In GPRS networks, however, network access is typically associated with a subscriber or user of a device. A GPRS device therefore typically has a subscriber identity module, commonly referred to as a Subscriber Identity Module (SIM) card, in order to operate on a GPRS network.

When network registration or activation procedures have been completed, the mobile device 80 may send and receive communication signals over the communication network 110. Signals received from the communication network 110 by the receive antenna 154 are routed to the receiver 150, which provides for signal amplification, frequency down conversion, filtering, channel selection, etc., and may also provide analog to digital conversion. Analog-to-digital conversion of the received signal allows the DSP 158 to perform more complex communication functions, such as demodulation and decoding. In a similar manner, signals to be transmitted to the network 110 are processed (e.g., modulated and encoded) by the DSP 158 and are then provided to the transmitter 152 for digital to analog conversion, frequency up conversion, filtering, amplification and transmission to the communication network 110 (or networks) via the transmit antenna 156.

In addition to processing communication signals, the DSP 158 provides for control of the receiver 150 and the transmitter 152. For example, gains applied to communication signals in the receiver 150 and the transmitter 152 may be adaptively controlled through automatic gain control algorithms implemented in the DSP 158.

In a data communication mode, a received signal, such as a text message or web page download, is processed by the communication subsystem 170 and is input to the microprocessor 128. The received signal is then further processed by the microprocessor 128 for an output to the display 126, or alternatively to some other auxiliary I/O devices 106. A device user may also compose data items, such as e-mail messages, using the keyboard 114 and/or some other auxiliary I/O device 106, such as a touchpad, a rocker switch, a thumb-wheel, or some other type of input device. The composed data items may then be transmitted over the communication network 110 via the communication subsystem 170.

In a voice communication mode, overall operation of the device is substantially similar to the data communication mode, except that received signals are output to a speaker 111, and signals for transmission are generated by a microphone 112. Alternative voice or audio I/O subsystems, such as a voice message recording subsystem, may also be implemented on the mobile device 80. In addition, the display 126 may also be utilized in voice communication mode, for example, to display the identity of a calling party, the duration of a voice call, or other voice call related information.

The short-range communications subsystem 102 enables communication between the mobile device 80 and other proximate systems or devices, which need not necessarily be similar devices. For example, the short-range communications subsystem may include an infrared device and associated circuits and components, or a Bluetooth™ communication module to provide for communication with similarly-enabled systems and devices.

### Method in a Mobile Device

Referring now to Figure 2, shown is a flowchart of an example method of determining that the maximum number of IP sessions is already established. This method may be implemented in a mobile device, for example by the IP session priority management function 13 of the mobile device 10 shown in Figure 1B, or by the mobile device 80 shown in Figure 1C.

At step 2-1, the mobile device transmits a request of a predefined type. The wireless network receives and processes the request. In this example, it is assumed that the wireless network cannot fulfill the request because a maximum number of IP sessions is already established for the mobile device. The wireless network transmits a response, which is received by the mobile device at step 2-2. The response indicates that the request cannot be fulfilled because the maximum number of IP sessions is already established for the mobile device. At step 2-3, the mobile device determines based on the response that the maximum number of IP sessions is already established.

There are many ways that the response can indicate that the request cannot be fulfilled because the maximum number of IP sessions is already established for the mobile device. In some implementations, the response includes a cause code indicating that the request cannot be fulfilled because the maximum number of IP sessions is already established for the mobile device. More generally, the response may include any appropriate indication that the request cannot be fulfilled because the maximum number of IP sessions is already established for the mobile device.

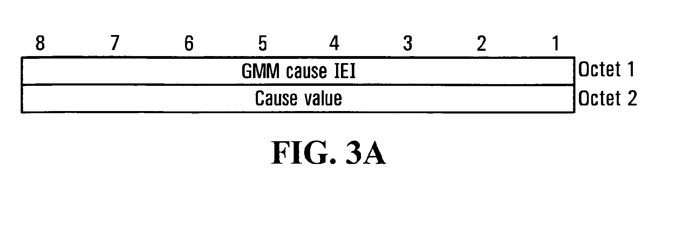

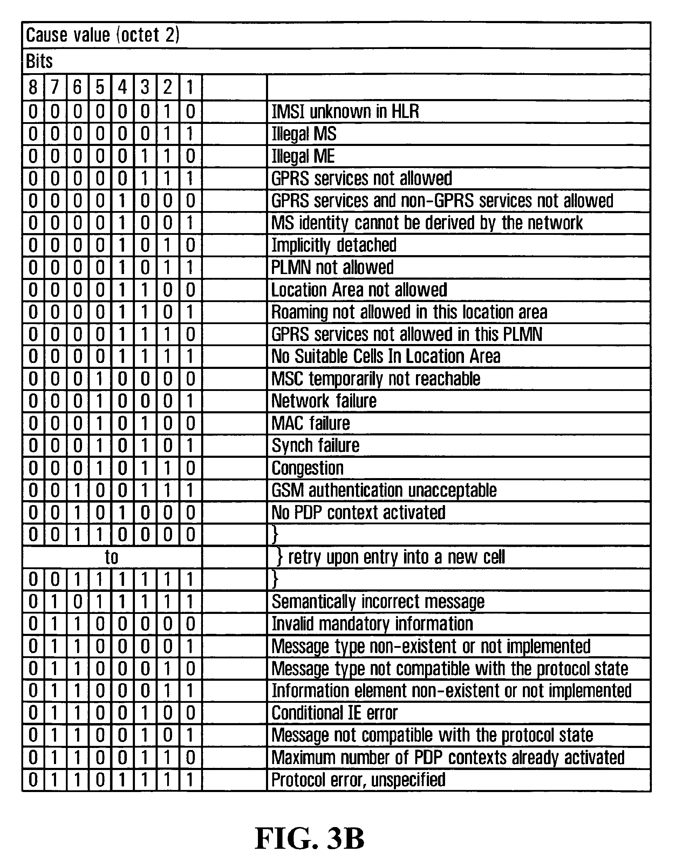

Referring now to Figures 3A and 3B, shown are tables of an example GMM cause information element. It is to be understood that the GMM cause information element shown in the illustrated example is a specific implementation of a cause code for example purposes only. The purpose of the GMM cause information element is to indicate the reason why a GMM request from the mobile device is rejected by the wireless network. As shown in Figure 3A, the GMM cause is a type 3 information element with 2 octets length. The second octet is for the cause value. As shown in figure 3B, there are many possible cause values. Cause value "01100110" indicates that the maximum number of PDP contexts has already been activated. In some implementations, the cause value is part of causes related to PLMN specific network failures and congestion/Authentication Failures.

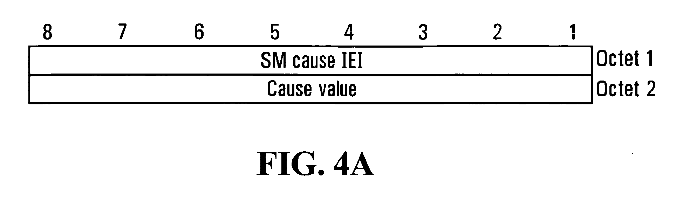

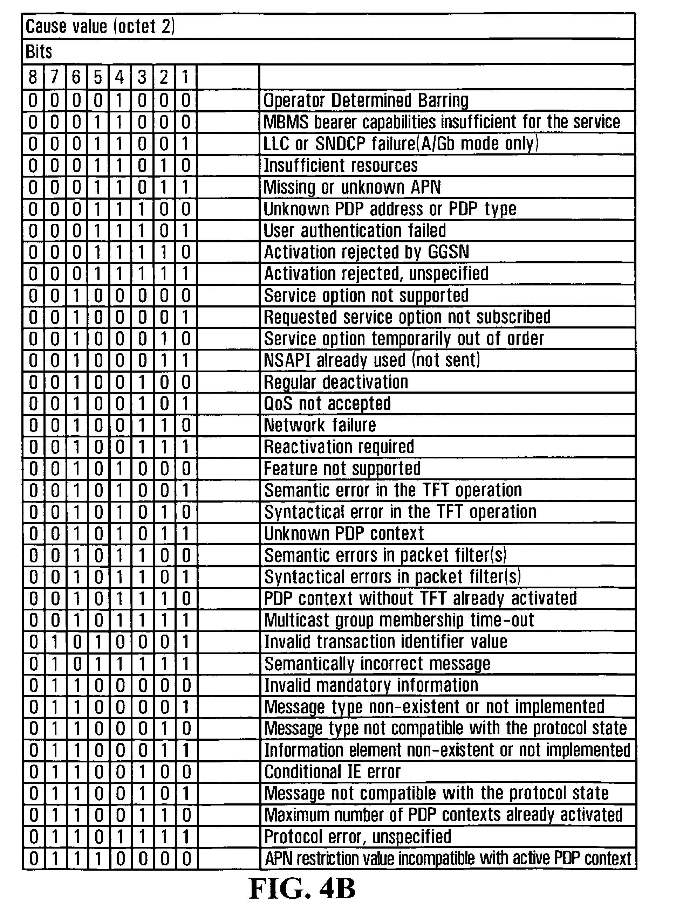

Referring now to Figures 4A and 4B, shown are tables of an example SM cause information element. It is to be understood that the SM cause information element shown in the illustrated example is a specific implementation of a cause code for example purposes only. The purpose of the SM cause information element is to indicate the reason why a session management request is rejected. As shown in Figure 4A, the SM cause is a type 3 information element with 2 octets length. The second octet is for the cause value. As shown in figure 4B, there are many possible cause values. Cause value "01100110" indicates that the maximum number of PDP contexts has already been activated. In some implementations, the cause value is part of GPRS specific cause values for GPRS Session Management.

In some implementations, a cause value of 102 indicates that the maximum number of PDP contexts has already been activated. More generally, any appropriate cause value may be implemented.

There are many possibilities for the request of the predefined type and the response. In some implementations, the type of response depends on the type of request. Examples are provided below.

In one example, the request may be an Activate IP Session Request for requesting a new IP session to be established, while the response is an Activate IP Session Reject for rejecting the IP Session Request. In some implementations, the Activate IP Session Request is an Activate PDP context request while the response is an Activate PDP context Reject.

In another example, the request is an IP session Service Request for requesting service for an existing IP session, while the response is an IP Service Reject for rejecting the IP session Service Request. In some implementations, the IP session Service Request is a service request and the IP Service Reject is a Service Reject.

In another example, the request is an Activate PDP context request for requesting a new PDP context to be established, while the response is an MT PDP Deactivate Request for deactivating an existing PDP context. This may occur for example if the mobile device transmits the Activate PDP context request in an area that does not support enough PDP contexts to fulfill the request. In this example, since a new PDP context is not initially established in response to the Activate PDP context request, the request is considered to be unfulfilled. However, in some implementations, after an existing PDP context is deactivated, the new PDP context that was requested becomes established.

In another example, the request is an RAU request for requesting to change to a new routing area, while the response is an MT PDP Deactivate Request for deactivating an existing PDP context. This may occur for example if the mobile device transmits the RAU request after moving to a new routing area that does not support enough PDP contexts to fulfill the request. Other requests and corresponding responses are possible.

Example messages have been provided above for the response to the request. In some implementations, the messages are based on messages defined in 3GPP (3rd Generation Partnership Project) TS 24.008 V7.5.0 with appropriate modification for indicating that the request cannot be fulfilled because the maximum number of IP sessions is already established for the mobile device.
Other implementations are possible.

In some implementations, the type of request depends on the state of the mobile device. For example, the type of request may vary depending on whether the mobile device is in the Idle State as compared with the Active/Connected State. In some implementations, the mobile device might transmit an IP Session Service Request message so as to request service for an existing IP Session while in the Active/Connected State. However, in some implementations, the mobile device never transmits an IP Session Service Request message while in the Idle State. In some implementations, requests of the predefined type are transmitted only while the mobile device is in the Active/Connected State. Other implementations are possible.

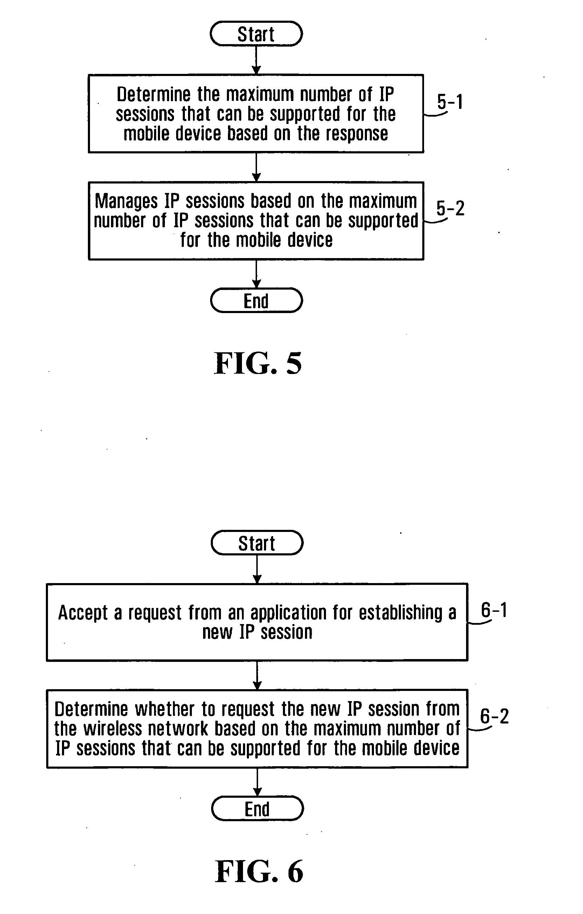

In some implementations, the mobile device manages IP sessions based on the maximum number of IP sessions that can be supported for the mobile device. An example is provided with reference to Figure 5. At step 5-1, the mobile device determines the maximum number of IP sessions that can be supported for the mobile device based on the response. At step 5-2, the mobile device manages IP sessions based on the maximum number of IP sessions that can be supported for the mobile device.

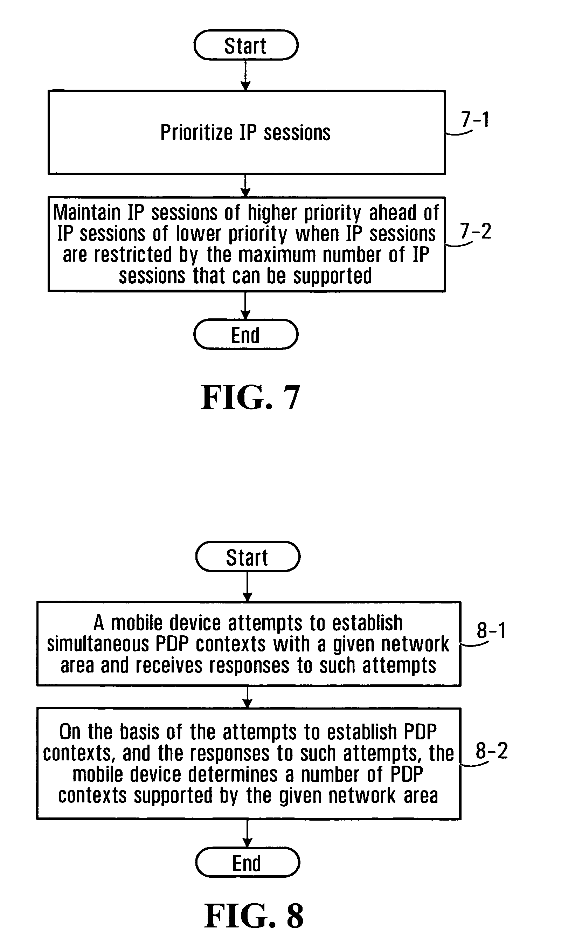

There are many ways for the mobile device to determine the maximum number of IP sessions that can be supported. In some implementations, the manner in which the mobile device determines the maximum number of IP sessions that can be supported depends on the request of the predefined type. For instance, if the request is an Activate PDP context request and the mobile device is aware of how many IP sessions are established prior to the request, then upon receiving a response indicating that the request cannot be fulfilled because the maximum number of IP sessions is already established, the mobile device might determine that the maximum number of IP sessions that can be supported is equal to how many IP sessions are established prior to the request. There are other possibilities for determining the maximum number of IP sessions that can be supported. Other examples are provided later with reference to Figure 8.

There are many ways that the mobile device may manage IP sessions based on the maximum number of IP sessions that can be supported for the mobile device. Examples are provided below with reference to Figures 6 and 7. It is to be understood that these examples are specific and are intended to be for example purposes only. Other implementations are possible.

Referring first to Figure 6, at step 6-1 the mobile device accepts a request from an application for establishing a new IP session. The application may be any application running on the mobile device that is adapted to communicate over an IP session. At step 6-2, the mobile device determines whether to request the new IP session from the wireless network based on the maximum number of IP sessions that can be supported for the mobile device. The mobile device may for example request the new IP session only if the number of IP sessions that are established is less than the maximum number of IP sessions that can be supported for the mobile device.

Referring next to Figure 7, at step 7-1 the mobile device prioritizes IP sessions. At step 7-2, the mobile device maintains IP sessions of higher priority ahead of IP sessions of lower priority when IP sessions are restricted by the maximum number of IP sessions that can be supported for the mobile device.

It is to be understood that an IP session is indicated to be of "higher" priority when its priority is generally indicated as being higher than other IP sessions. In some implementations, this is the IP session with the highest priority. An IP session indicated as having a higher priority may not be a high priority IP session per se, but is nonetheless indicated as having a higher priority than other IP sessions.

There are many ways that the mobile device may prioritizes IP sessions. In some implementations, the mobile device accepts user input for determining a respective priority for each IP session. Accordingly, the mobile device determines the respective priority for each IP session based on the user input. In other implementations, the mobile device maintains a record of a predefined priority level for each IP session of a predefined type. Accordingly, the mobile device determines the respective priority for each IP session based on the record. Other implementations are possible.

### Another Method in a Mobile Device

In a specific example of a method of establishing a PDP context, when a GPRS mobile phone sets up a PDP context, an Access Point Name (APN) is determined, and the access point is then used in a DNS query to a private DNS network. This process (called APN resolution) finally gives the IP address of the GGSN which should serve the access point. At this point a PDP context can be activated.

GPRS and UMTS networks have a limitation on the number of simultaneous PDP contexts that are supported.
The number of PDP contexts may vary as a mobile device moves between differing parts of a network, or between different networks. Currently there is no information supplied to the mobile device to inform it of the number of PDP contexts supported. The result is that when a mobile device moves from a first area where there are enough PDP contexts supported to satisfy the mobile device's needs to a second area where there are not enough PDP contexts supported to satisfy the mobile device's needs, the network might drop one or more of the existing PDP contexts in an unpredictable manner. This problem is especially prevalent in UMTS networks as many only support one PDP context. In such networks, only one device function can have connectivity at a time and so always-on services such as push E-mail cannot operate simultaneously with WAP (wireless access point) surfing on a network's specific APN.

An event based method is provided for determining the number of PDP contexts in a given network area. A network area may be an entire network or part of a network. The following are specific examples of events that can occur when PDP contexts are activated one past the number supported:
MT PDP Deactivate Request;
PDP Activate Reject.

In some embodiments, cause codes within the messages are used to allow differentiation between deactivations and rejects for other legitimate reasons. When any of these events occurs with the correct cause code the number of active PDP contexts is counted and this is stored as watermark to the number of PDP contexts supported by the network. In some embodiments, steps to determine the number of supported PDP may be proactively done at startup (i.e. discovery) or in the background as different APNs are requested.

Referring to Figure 8, shown is a flowchart of a method of determining the number of supported PDP contexts. This method may be implemented in a mobile device, for example by the IP session priority management function 13 of the mobile device 10 shown in Figure 1B or by the mobile device 80 shown in Figure 1C. At step 8-1, a mobile device attempts to establish simultaneous PDP contexts with a given network area and receives responses to such attempts. At step 8-2 on the basis of the attempts to establish PDP contexts, and the responses to such attempts, the mobile device determines a number of PDP contexts supported by the given network area.

In some embodiments, a default value for the number of PDP contexts supported by a network area is used that is based on capabilities of the wireless network. Such a default will also represent a maximum number of PDP contexts a network can support from the perspective of a given device. For example, if a given mobile device supports a maximum of 6 PDP contexts, then the default value initially is 6, and this will be reduced once the device attempts to establish that many simultaneous contexts unsuccessfully.

In some embodiments, establishing a number of PDP contexts supported by a given network area involves performing a count of how many simultaneous PDP contexts have been established. This can be done on an ongoing basis as new contexts are added. Alternatively, the count can be performed after one of the scenarios has occurred that indicates no more contexts are supported.

In some embodiments, determining the number of PDP contexts supported by the given network area involves looking for specific defined responses to attempts to establish a PDP context. Once such a defined response is received, a conclusion that the most recent attempt to establish a PDP context was an attempt to establish one more PDP context than is supported by the current network. As such, the number of PDP contexts supported by the given network area can be set to the number of simultaneous PDP contexts that have been established. This can involve looking at an ongoing count that was performed, or performing the count upon receiving the defined response.

The set of one or more defined responses that can trigger the above behaviour is implementation specific. The following is a set of specific defined responses one or more of which might be implemented:
a PDP activate reject response with a cause code 26;
a PDP activate reject response with a cause code 38;
a PDP activate reject response with a cause code 101;
a response requesting the deactivation of another existing context;
a response requesting the release of radio bearer associated with another existing context; and
a response specifically configured to indicate that there are no more PDP contexts available.

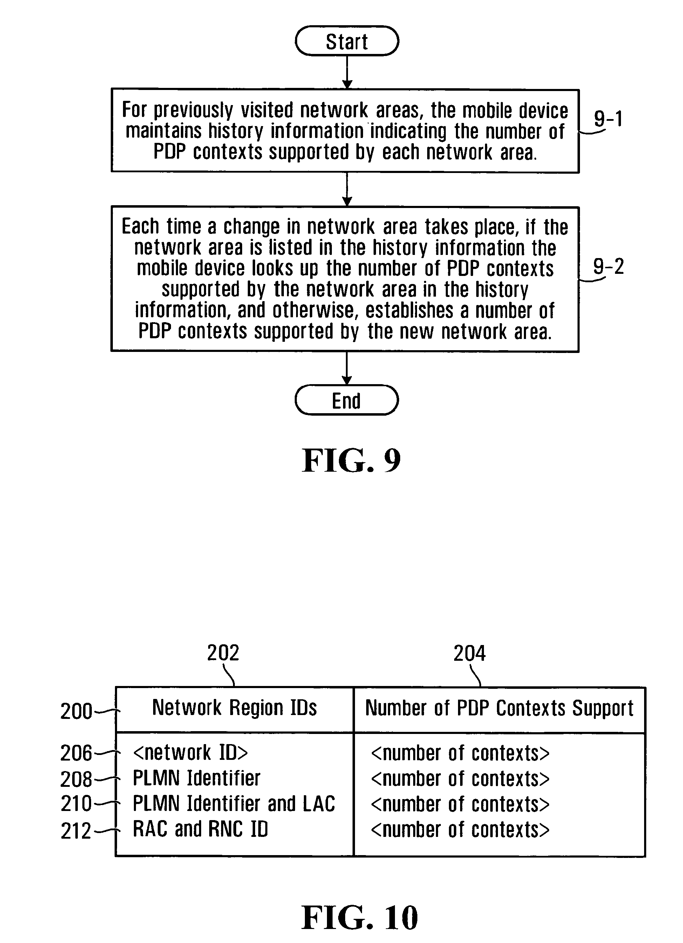

Referring now to Figure 9, shown is a flowchart of a method of maintaining history information. This method may be implemented in a mobile device, for example by the IP session priority management function 13 of the mobile device 10 shown in Figure 1B or by the mobile device 80 shown in Figure 1C. At step 9-1, for previously visited network areas, the mobile device maintains history information indicating the number of PDP contexts supported by each network area. At step 9-2, each time a change in network area takes place, if the network area is listed in the history information the mobile device looks up the number of PDP contexts supported by the network area in the history information, and otherwise, establishes a number of PDP contexts supported by the new network area.

Referring now to Figure 10, shown is a table 200 of an example format in which the history information may be maintained. The table 200 has a first column 202 for storing network area identifiers, and a second column 204 for storing the number of PDP contexts supported. A generic entry for the table is indicated at 206. The context support information can be maintained to a network area granularity defined on an implementation specific basis. In some embodiments, the granularity is to that of PLMN identifier, and an example record is indicated at 208; in some embodiments the granularity is to that of combined PLMN and LAC (local area code), and an example record is indicated at 210; in some embodiments the granularity is to that of combined RAC (routing area code) and RNC ID and example record is indicated at 212. Other granularities can alternatively be used. The granularity need not be consistent across all network areas.

### Context Management based on Number of Contexts Supported

In some embodiments, having determined the number of contexts that are supported, the contexts are managed taking into account this information for example by controlling which PDP contexts are activated and deactivated to make behaviour more predictable. The context management is particularly useful when there are fewer PDP contexts than there are device functions that need PDP contexts.

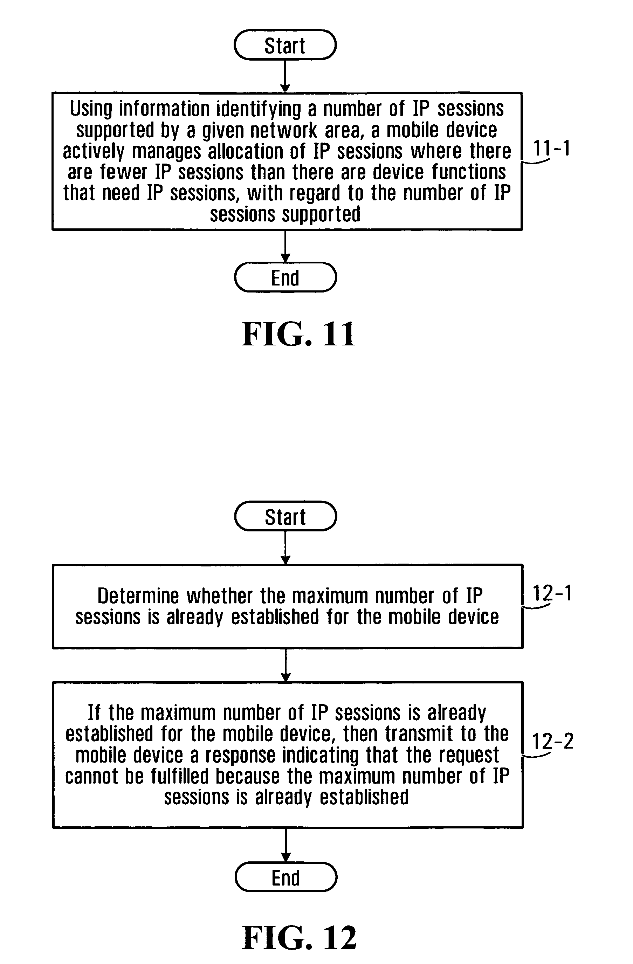

Referring now to Figure 11, shown is a flowchart of an example method of managing IP sessions. This method may be implemented in a mobile device, for example by the IP session priority management function 13 of the mobile device 10 shown in Figure 1B or by the mobile device 80 shown in Figure 1C. At step 11-1, using information identifying a number of IP sessions supported by a given network area, a mobile device actively manages allocation of IP sessions where there are fewer IP sessions than there are device functions that need IP sessions, with regard to the number of IP sessions supported.

The number of contexts may be determined using any of the above-described methods. More generally, the mobile device needs to somehow have determined or been made aware of the number of contexts supported. For example, in some embodiments, the mobile device receives the context support information from the given network area, for example when the mobile device first connects in a network area. In some embodiments, the mobile device is pre-configured with the context support information for a plurality of network areas. In some embodiments, each of a plurality of mobile devices determines the number of PDP contexts supported by network areas that mobile device visits, and makes this information available to the plurality of mobile devices.
In some embodiments, the mobile device determines the information identifying the number of PDP contexts supported by a given network area by performing a database query.

In one example of context management, prior to changing network areas from a first network area to a second network area in which fewer PDP contexts are supported than in the first network area, the mobile device pre-emptively deactivates at least one selected PDP context. For example, if it is known that a particular first PDP context must be maintained, but that a second PDP context can be dropped, then by dropping the second PDP context before changing network areas, the chance of the first PDP context not being dropped after changing network areas is increased. This example assumes that history information for the next network is available.

In some embodiments, actively managing the allocation of PDP contexts involves prioritizing device functions, and allocating the PDP contexts by priority.

In some embodiments, after changing network areas from a first network area to a second network area in which fewer PDP contexts are supported than in the first network area, the mobile device selectively determines which device functions are to be allocated the PDP contexts in the second network area, and establishes these if not already established and deactivates others if not already deactivated. The behaviour of the new network may be unpredictable after moving from a first network area to a second network area with fewer supported contexts. This approach basically involves making the move, and then taking stock of which device functions were given PDP contexts and which were not, and then making any necessary adjustments by establishing and/or deactivating contexts.

The above-summarized methods may find application in intra-RAT (radio access technology) scenarios (e.g. with WCDMA/UMTS networks) as well as in inter-RAT scenarios such as GPRS to UMTS handover.

The description above has assumed that it is the number of supported simultaneous PDP contexts that is to be determined, and then subsequently managed in some implementations. More generally, a similar approach can be used to determine the number of supported simultaneous IP sessions, a PDP context being a specific example of an IP session.

### Method in a Wireless Network

Referring now to Figure 12, shown is a flowchart of an example method of transmitting a response indicating that a request cannot be fulfilled because the maximum number of IP sessions is already established. This method may be implemented in a wireless network, for example by the IP session function 51 of the wireless network 100 shown in Figure 1A.

The steps of the flowchart are executed upon receiving from a mobile device a request of a predefined type. At step 12-1, the wireless network determines whether the maximum number of IP sessions is already established for the mobile device. At step 12-2, if the maximum number of IP sessions is already established for the mobile device, then the wireless network transmits to the mobile device a response indicating that the request cannot be fulfilled because the maximum number of IP sessions is already established.

There are many ways that the response can indicate that the request cannot be fulfilled because the maximum number of IP sessions is already established for the mobile device. Examples have already been presented above and are therefore not repeated here.

There are many possibilities for the request of the predefined type and the response. Examples have already been presented above and are therefore not repeated here.

### IP Sessions

In the examples presented above, references are made to IP sessions. It is to be understood that there are many possibilities for the IP sessions. The IP sessions may for example include any of an Always-On IP session, an IM (Instant Messaging) IP session, a WAP (Wireless Application Protocol) IP session, an MMS (Multimedia Messaging Service) IP session, a DUN (Dial-Up Networking) IP session, an LBS (Location Base Services) IP session, IP Modem IP session, and a PTT (Push-to-Talk) IP session. The nature of the IP sessions is implementation specific and typically depends on the wireless network. In some implementations, the wireless network is a UMTS network and each IP session is part of a respective PDP (Packet Data Protocol) context.
Numerous modifications and variations of the present application are possible in light of the above teachings. It is therefore to be understood that within the scope of the appended claims, the application may be practised otherwise than as specifically described herein.

## Claims

1. A method in a mobile device comprising:
transmitting (2-1) at least one request of a predefined type;
receiving (2-2) an indication that a given request of the at least one request cannot be fulfilled because a maximum number of Internet Protocol 'IP' sessions is already established for the mobile device;
determining (5-1) the maximum number of IP sessions supported for the mobile device in a given network area as being the number of IP sessions established for the mobile device when the indication is received; and
having determined the maximum number of IP sessions supported for the mobile device in the given network area, actively managing (5-2,11-1) allocation of IP sessions where there are fewer IP sessions than there are device functions that need IP sessions, with regard to the maximum number of IP sessions supported.

2. The method of claim 1 wherein:
transmitting (2-1) the at least one request comprises transmitting (8-1) a plurality of requests in an attempt to establish simultaneous IP sessions;
receiving (2-2) the indication comprises receiving (8-1) responses to the plurality of requests; and
determining (5-1) the maximum number of IP sessions supported comprises determining (8-2) a number of IP sessions supported by the given network area on the basis of the attempts to establish IP sessions and the responses to such attempts.

3. The method of claim 2 wherein determining (5-1) the maximum number of IP sessions supported further comprises:
establishing a default value for the maximum number of IP sessions supported based on capabilities of the wireless network.

4. The method of any one of claims 1 to 3 wherein determining (5-1) the maximum number of IP sessions supported further comprises:
performing a count of how many simultaneous IP sessions have been established.

5. The method of claim 4 wherein determining (5-1) the maximum number of IP sessions supported further comprises:
upon receiving a defined response to an attempt to establish an IP session, setting the number of IP sessions supported by the given network area to the count of how many simultaneous IP sessions have been established.

6. The method of claim 5 wherein the defined response is any of:
a Packet Data Protocol 'PDP' activate reject response with a cause code 26;
a service option temporarily out of order response with a cause code of 34;
a PDP activate reject response with a cause code 38;
a PDP activate reject response with a cause code 101;
a response requesting the deactivation of another existing context;
a response requesting the release of radio bearer associated with another existing context; or
a response specifically configured to indicate that there are no more PDP contexts available.

7. The method of any one of claims 1 to 6 further comprising:
for previously visited network areas, maintaining (9-1) history information (200) indicating the maximum number of IP sessions supported by each network area; and
upon moving to a new network area, if the new network area is listed in the history information, looking (9-2) up the maximum number of IP sessions supported by the network area in the history information, and otherwise, determining the maximum number of IP sessions supported by the new network area.

8. The method of claim 7 wherein the history information (200) is maintained for network areas to a granularity of any of: Public Land Mobile Network 'PLMN' (208); PLMN and local area code 'LAC' (210); or Routing Area Code 'RAC' and Radio Network Controller Identifier 'RNC Id' (212).

9. The method of any one of claims 1 to 8 further comprising:
prior to changing network areas from a first network area to a second network area in which fewer IP sessions are supported than in the first network area, the mobile device pre-emptively deactivating at least one selected IP session.

10. The method of any preceding claim wherein actively managing (5-2, 11-1) the allocation of IP sessions
comprises:
prioritizing IP sessions and maintaining IP sessions of higher priority ahead of IP sessions of lower priority when IP sessions are restricted by the maximum number of IP sessions that can be supported for the mobile device.

11. The method of any one of claims 1 to 9 wherein actively managing (5-2, 11-1) the allocation of IP sessions comprises:
prioritizing device functions, and allocating the IP sessions by priority.

12. The method of any of claims 1 to 9 or 11 wherein actively managing (11-1) the allocation of IP sessions comprises:
after changing network areas from a first network area to a second network area in which fewer IP sessions are supported than in the first network area, selectively determining which device functions are to be allocated the IP sessions in the second network area, and establishing these if not already established and deactivating others if not already deactivated.

13. The method of any one of claims 1 to 12 wherein receiving the indication comprises:
receiving (2-2) a response to the given request, the response comprising a cause code indicating that the given request cannot be fulfilled because the maximum number of IP sessions is already established for the mobile device.

14. The method of claim 13 wherein the cause code has a cause value of 102 indicating that the maximum number of IP sessions is already activated.

15. The method of claim 13 or claim 14 wherein:
the given request is an Activate PDP context request for requesting a new PDP context to be established, and the response is an Activate PDP context reject for rejecting the Activate PDP context request; or
the given request is a PDP context service request for requesting service for an existing PDP context, and the response is a service reject for rejecting the PDP context service request; or
the given request is an Activate PDP context request for requesting a new PDP context to be established, and the response is a mobile terminal 'MT' PDP Deactivate Request for deactivating an existing PDP context; or
the given request is an Routing Area Update 'RAU' request for requesting to change to a new routing area, and the response is an MT PDP Deactivate Request for deactivating an existing PDP context.

16. The method of any one of claims 1 to 15 further comprising:
accepting (6-1) a request from an application for establishing a new IP session;
wherein actively managing (5-2, 11-1) the allocation of IP sessions comprises determining (6-2) whether to request the new IP session from the wireless network based on the maximum number of IP sessions supported.

17. The method of any one of claims 1 to 15 further comprising:
prioritising (7-1) IP sessions;
wherein actively managing (5-2, 11-1) the allocation of IP sessions comprises maintaining (7-2) IP sessions of higher priority ahead of IP sessions of lower priority when IP sessions are restricted by the maximum number of IP sessions supported.

18. The method of any one of claims 1 to 17 wherein each IP session is part of a respective PDP context.

19. A computer readable medium (13) having stored thereon instructions executable by a processor (12) of a computing device to implement all of the steps of the method of any one of claims 1 to 18.

20. A mobile device (10) comprising:
a wireless access radio (11) adapted to communicate with a wireless network; and
an IP session management function (13) adapted to:
transmit (2-1) at least one request of a predefined type;
receive (2-2) an indication that a request of the at least one request cannot be fulfilled because a maximum number of IP sessions is already established for the mobile device;
determine (5-1) the maximum number of IP sessions supported for the mobile device in a given network area as being the number of IP sessions established for the mobile device when the indication is received; and
having determined the maximum number of IP sessions supported for the mobile device in the given network area, actively manage (5-2,11-1) allocation of IP sessions where there are fewer-IP sessions than there are device functions that need IP sessions, with regard to the maximum number of IP sessions supported.

21. A method in a wireless network comprising:
upon receiving from a mobile device residing in a given network area a request of a predefined type:
determining (12-1) whether there is a maximum number of IP sessions already established for the mobile device for the given network area; and
if the maximum number of IP sessions is already established, transmitting (12-2) to the mobile device a response indicating that the request cannot be fulfilled because the maximum number of IP sessions is already established.

22. The method of claim 21 wherein the response comprises a cause code, the cause code indicating that the request cannot be fulfilled because the maximum number of IP sessions is already established.

23. The method of claim 22 wherein the cause code has a cause value of 102 indicating that the maximum number of IP sessions is already activated.

24. The method of any one of claims 21 to 23 wherein:
the request of the predefined type is an Activate IP Session Request for requesting a new IP session to be established, and the response is an IP Session Reject for rejecting the Activate IP Session Request; or
the request of the predefined type is an IP Session Service Request for requesting service for an existing IP session, and the response is an IP Service Reject for rejecting the IP Session Service Request; or
the request of the predefined type is an Activate PDP context request for requesting a new PDP context to be established, and the response is a mobile terminal 'MT' PDP Deactivate Request for deactivating an existing PDP context; or
the request of the predefined type is aRouting Area Update 'RAU' request for requesting to change to a new routing area, and the response is an MT PDP Deactivate Request for deactivating an existing PDP context.

25. The method of any one of claims 21 to 24 wherein each IP session is part of a respective PDP context.

26. A computer readable medium (51) having stored thereon instructions executable by a processor (52) of a computing device or computer system to implement all of the steps of the method of any one of claims 21 to 25.

27. A wireless network (100) comprising an IP session function (51) adapted to:
upon receiving from a mobile device residing in a given network area a request of a predefined type:
determine (12-1) whether there is a maximum number of IP sessions already established for the mobile device for the given network area; and
if the maximum number of IP sessions is already established, transmit (12-2) to the mobile device a response indicating that the request cannot be fulfilled because the maximum number of IP sessions is already established.

## Patentansprüche

1. Verfahren in einem Mobilgerät, umfassend:
das Übertragen (2-1) von mindestens einer Anforderung eines vordefinierten Typs;
das Empfangen (2-2) einer Anzeige, dass eine gegebene Anforderung von der mindestens einen Anforderung nicht erfüllt werden kann, weil eine maximale Anzahl von Internet Protocol-'IP'-Verbindungen für das Mobilgerät bereits eingerichtet wurde;
das Feststellen (5-1) der maximalen Anzahl von IP-Verbindungen, die für das Mobilgerät in einem gegebenen Netzbereich unterstützt wird, als die Anzahl der für das Gerät eingerichteten IP-Verbindungen, wenn die Anzeige empfangen wird; und
nachdem die maximale Anzahl der IP-Verbindungen festgestellt wurde, die für das Mobilgerät in dem gegebenen Netzbereich unterstützt wird, das aktive Verwalten (5-2, 11-1) der Zuweisung von IP-Verbindungen, wenn es weniger IP-Verbindungen gibt, als es Gerätefunktionen gibt, die IP-Verbindungen benötigen, im Hinblick auf die unterstützte maximale Anzahl der IP-Verbindungen.

2. Verfahren gemäß Anspruch 1, wobei:
das Übertragen (2-1) der mindestens einen Anforderung das Übertragen (8-1) einer Mehrzahl von Anforderungen umfasst, um zu versuchen, simultane IP-Verbindungen einzurichten;
das Empfangen (2-2) der Anzeige das Empfangen (8-1) von Antworten auf die Mehrzahl von Anforderungen umfasst; und
das Feststellen (5-1) der unterstützten maximalen Anzahl von IP-Verbindungen das Bestimmen (8-2) einer Anzahl von IP-Verbindungen umfasst, die durch den gegebenen Netzbereich unterstützt wird, auf der Basis der Versuche zur Einrichtung von IP-Verbindungen und der Antworten auf diese Versuche.

3. Verfahren gemäß Anspruch 2, wobei das Feststellen (5-1) der unterstützten maximalen Anzahl von IP-Verbindungen des Weiteren umfasst:
das Einrichten eines Standardwerts für die unterstützte maximale Anzahl von IP-Verbindungen auf der Basis der Fähigkeiten des Drahtlosnetzes.

4. Verfahren gemäß einem der Ansprüche 1 bis 3, wobei das Feststellen (5-1) der unterstützten maximalen Anzahl von IP-Verbindungen des Weiteren umfasst:
das Durchführen einer Zählung, wie viele simultane IP-Verbindungen eingerichtet wurden.

5. Verfahren gemäß Anspruch 4, wobei das Feststellen (5-1) der unterstützten maximalen Anzahl von IP-Verbindungen des Weiteren umfasst:
bei Empfang einer definierten Antwort auf einen Versuch zum Einrichten einer IP-Verbindung, das Festlegen der durch den gegebenen Netzbereich unterstützten maximalen Anzahl von IP-Verbindungen auf die Zählung, wie viele simultane IP-Verbindungen eingerichtet wurden.

6. Verfahren gemäß Anspruch 5, wobei die definierte Antwort eines der Folgenden ist:
eine Antwort des Typs "Packet Data Protocol-'PDP'-Aktivierung abgelehnt" mit einem Ursachencode von 26;
eine Antwort des Typs "Serviceoption vorübergehend gestört" mit einem Ursachencode von 34;
eine Antwort des Typs "PDP-Aktivierung abgelehnt" mit einem Ursachencode von 38;
eine Antwort des Typs "PDP-Aktivierung abgelehnt" mit einem Ursachencode von 101;
eine Antwort, welche die Deaktivierung eines anderen existierenden Kontexts anfordert;
eine Antwort, welche die Freigabe des Radio Bearers anfordert, der mit einem anderen existierenden Kontext verknüpft ist; oder
eine Antwort, die speziell für die Anzeige konfiguriert ist, dass es keine weiteren verfügbaren PDP-Kontexte gibt.

7. Verfahren gemäß einem der Ansprüche 1 bis 6, des Weiteren umfassend:
für zuvor besuchte Netzbereiche, das Führen (9-1) von Verlaufsinformationen (200), welche die von jedem Netzbereich unterstützte maximale Anzahl von IP-Verbindungen anzeigen; und
beim Bewegen in einen neuen Netzbereich, falls der neue Netzbereich in den Verlaufsinformationen aufgelistet ist, das Nachschlagen (9-2) der durch den Netzbereich unterstützten maximalen Anzahl von IP-Verbindungen in den Verlaufsinformationen, und anderenfalls das Feststellen der durch den neuen Netzbereich unterstützten maximalen Anzahl von IP-Verbindungen.

8. Verfahren gemäß Anspruch 7, wobei die Verlaufsinformationen (200) für Netzbereiche bis zu einer der folgenden Granularitäten geführt werden: Public Land Mobile Network 'PLMN' (208); PLMN und Local Area Code 'LAC' (210); oder Routing Area Code 'RAC' und Radio Network Controller Identifier 'RNC Id' (212).

9. Verfahren gemäß einem der Ansprüche 1 bis 8, des Weiteren umfassend:
vor dem Wechsel der Netzbereiche von einem ersten Netzbereich in einen zweiten Netzbereich, in dem weniger IP-Verbindungen unterstützt werden als in dem ersten Netzbereich, das präventive Deaktivieren von mindestens einer ausgewählten IP-Verbindung durch das Mobilgerät.

10. Verfahren gemäß einem der vorherigen Ansprüche, wobei das aktive Verwalten (5-2, 11-1) der Zuweisung von IP-Verbindungen umfasst:
das Priorisieren von IP-Verbindungen und das Aufrechterhalten von IP-Verbindungen mit höherer Priorität im Gegensatz zu IP-Verbindungen mit geringerer Priorität, wenn die IP-Verbindungen durch die maximale Anzahl von IP-Verbindungen beschränkt sind, die für das Mobilgerät unterstützt werden kann.

11. Verfahren gemäß einem der Ansprüche 1 bis 9, wobei das aktive Verwalten (5-2, 11-1) der Zuweisung von IP-Verbindungen umfasst:
das Priorisieren von Gerätefunktionen und die Zuweisung der IP-Verbindungen nach Priorität.

12. Verfahren gemäß einem der Ansprüche 1 bis 9 oder 11, wobei das aktive Verwalten (11-1) der Zuweisung von IP-Verbindungen umfasst:
nach dem Wechsel der Netzbereiche von einem ersten Netzbereich in einen zweiten Netzbereich, in dem weniger IP-Verbindungen unterstützt werden als in dem ersten Netzbereich, das selektive Feststellen, welchen Gerätefunktionen die IP-Verbindungen in dem zweiten Netzbereich zugewiesen werden sollen, und
das Einrichten dieser Verbindungen, sofern sie noch nicht eingerichtet wurden, und das Deaktivieren anderer, sofern diese noch nicht deaktiviert wurden.

13. Verfahren gemäß einem der Ansprüche 1 bis 12, wobei das Empfangen der Anzeige umfasst:
das Empfangen (2-2) einer Antwort auf die gegebene Anforderung, wobei die Antwort einen Ursachencode umfasst, der angibt, dass die gegebene Anforderung nicht erfüllt werden kann, weil die maximale Anzahl von IP-Verbindungen für das Mobilgerät bereits eingerichtet wurde.

14. Verfahren gemäß Anspruch 13, wobei der Ursachencode einen Ursachenwert von 102 hat, womit angezeigt wird, dass die maximale Anzahl von IP-Verbindungen bereits aktiviert wurde.

15. Verfahren gemäß Anspruch 13 oder Anspruch 14, wobei:
die gegebene Anforderung eine PDP-Kontextaktivierungsanforderung ist, mit der die Einrichtung eines neuen PDP-Kontexts angefordert wird, und die Antwort eine Ablehnung der PDP-Kontextaktivierung ist, mit der die PDP-Kontextaktivierungsanforderung abgelehnt wird; oder
die gegebene Anforderung eine PDP-Kontextserviceanforderung ist, mit der Service für einen existierenden PDP-Kontext angefordert wird, und die Antwort eine Serviceablehnung ist, mit der die PDP-Kontextserviceanforderung abgelehnt wird; oder
die gegebene Anforderung eine PDP-Kontextaktivierungsanforderung ist, mit der die Einrichtung eines neuen PDP-Kontexts angefordert wird, und die Antwort eine Mobile Terminal-'MT'-PDP-Deaktivierungsanforderung ist, mit der ein existierender PDP-Kontext deaktiviert wird; oder
die gegebene Anforderung eine Routing Area Update-'RAU'-Anforderung ist, mit der der Wechsel in einen neuen Routingbereich angefordert wird, und die Antwort eine MT-PDP-Deaktivierungsanforderung ist, mit der ein existierender PDP-Kontext deaktiviert wird.

16. Verfahren gemäß einem der Ansprüche 1 bis 15, des Weiteren umfassend:
das Akzeptieren (6-1) einer Anforderung von einer Anwendung zur Einrichtung einer neuen IP-Verbindung;
wobei das aktive Verwalten (5-2, 11-1) der Zuweisung von IP-Verbindungen das Feststellen (6-2) umfasst, ob die neue IP-Verbindung vom Drahtlosnetz basierend auf der unterstützten maximalen Anzahl von IP-Verbindungen angefordert werden soll.

17. Verfahren gemäß einem der Ansprüche 1 bis 15, des Weiteren umfassend:
das Priorisieren (7-1) der IP-Verbindungen;
wobei das aktive Verwalten (5-2, 11-1) der Zuweisung von IP-Verbindungen das Aufrechterhalten (7-2) von IP-Verbindungen mit höherer Priorität im Gegensatz zu IP-Verbindungen mit geringerer Priorität umfasst, wenn die IP-Verbindungen durch die unterstützte maximale Anzahl von IP-Verbindungen beschränkt sind.

18. Verfahren gemäß einem der Ansprüche 1 bis 17, wobei jede IP-Verbindung Bestandteil eines jeweiligen PDP-Kontexts ist.

19. Computerlesbares Medium (13), auf dem Anweisungen gespeichert sind, die durch einen Prozessor (12) eines Computergeräts ausgeführt werden können, um alle Schritte des Verfahrens gemäß einem der Ansprüche 1 bis 18 zu implementieren.

20. Mobilgerät (10), umfassend:
eine Drahtloszugangsfunkeinheit (11), die zur Kommunikation mit einem Drahtlosnetz eingerichtet ist; und
eine IP-Verbindungsverwaltungsfunktion (13), die eingerichtet ist zum:
Übertragen (2-1) von mindestens einer Anforderung eines vordefinierten Typs; Empfangen (2-2) einer Anzeige, dass eine Anforderung von der mindestens einen Anforderung nicht erfüllt werden kann, weil eine maximale Anzahl von IP-Verbindungen für das Mobilgerät bereits eingerichtet wurde;
Feststellen (5-1) der maximalen Anzahl von IP-Verbindungen, die für das Mobilgerät in einem gegebenen Netzbereich unterstützt wird, als die Anzahl der für das Gerät eingerichteten IP-Verbindungen, wenn die Anzeige empfangen wird; und
nachdem die maximale Anzahl der IP-Verbindungen festgestellt wurde, die für das Mobilgerät in dem gegebenen Netzbereich unterstützt wird, aktives Verwalten (5-2, 11-1) der Zuweisung von IP-Verbindungen, wenn es weniger IP-Verbindungen gibt, als es Gerätefunktionen gibt, die IP-Verbindungen benötigen, im Hinblick auf die unterstützte maximale Anzahl der IP-Verbindungen.

21. Verfahren in einem Drahtlosnetz, umfassend:
bei Empfang einer Anforderung eines vordefinierten Typs von einem Mobilgerät, das sich in einem gegebenen Netzbereich befindet:
das Feststellen (12-1), ob für das Mobilgerät für den gegebenen Netzbereich bereits eine maximale Anzahl von IP-Verbindungen eingerichtet wurde; und
falls die maximale Anzahl von IP-Verbindungen bereits eingerichtet ist, das Übertragen (12-2) einer Antwort an das Mobilgerät, die anzeigt, dass die Anforderung nicht erfüllt werden kann, weil die maximale Anzahl von IP-Verbindungen bereits eingerichtet wurde.

22. Verfahren gemäß Anspruch 21, wobei die Antwort einen Ursachencode umfasst, wobei der Ursachencode angibt, dass die Anforderung nicht erfüllt werden kann, weil die maximale Anzahl von IP-Verbindungen bereits eingerichtet wurde.

23. Verfahren gemäß Anspruch 22, wobei der Ursachencode einen Ursachenwert von 102 hat, womit angezeigt wird, dass die maximale Anzahl von IP-Verbindungen bereits aktiviert wurde.

24. Verfahren gemäß einem der Ansprüche 21 bis 23, wobei:
die Anforderung des vordefinierten Typs eine IP-Verbindungsaktivierungsanforderung ist, mit der die Einrichtung einer neuen IP-Verbindung angefordert wird, und die Antwort eine IP-Verbindungsablehnung ist, mit der die IP-Verbindungsaktivierungsanforderung abgelehnt wird; oder
die Anforderung des vordefinierten Typs eine IP-Verbindungsserviceanforderung ist, mit der Service für eine existierende IP-Verbindung angefordert wird, und die Antwort eine IP-Serviceablehnung ist, mit der die IP-Verbindungsserviceanforderung abgelehnt wird; oder
die Anforderung des vordefinierten Typs eine PDP-Kontextaktivierungsanforderung ist, mit der die Einrichtung eines neuen PDP-Kontexts angefordert wird, und die Antwort eine Anforderung zur Mobile Terminal-'MT'-PDP-Deaktivierung ist, mit der ein existierender PDP-Kontext deaktiviert wird; oder
die Anforderung des vordefinierten Typs eine Routing Area Update-'RAU'-Anforderung ist, mit der der Wechsel in einen neuen Routingbereich angefordert wird, und die Antwort eine MT-PDP-Deaktivierungsanforderung ist, mit der ein existierender PDP-Kontext deaktiviert wird.

25. Verfahren gemäß einem der Ansprüche 21 bis 24, wobei jede IP-Verbindung Bestandteil eines jeweiligen PDP-Kontexts ist.

26. Computerlesbares Medium (51), auf dem Anweisungen gespeichert sind, die durch einen Prozessor (52) eines Computergeräts oder Computersystems ausgeführt werden können, um alle Schritte des Verfahrens gemäß einem der Ansprüche 21 bis 25 zu implementieren.

27. Drahtlosnetz (100), umfassend eine IP-Verbindungsfunktion (51), die eingerichtet ist zum:
bei Empfang einer Anforderung eines vordefinierten Typs von einem Mobilgerät, das sich in einem gegebenen Netzbereich befindet:
Feststellen (12-1), ob für das Mobilgerät für den gegebenen Netzbereich bereits eine maximale Anzahl von IP-Verbindungen eingerichtet wurde; und
falls die maximale Anzahl von IP-Verbindungen bereits eingerichtet ist, Übertragen (12-2) einer Antwort an das Mobilgerät, die anzeigt, dass die Anforderung nicht erfüllt werden kann, weil die maximale Anzahl von IP-Verbindungen bereits eingerichtet wurde.

## Revendications

1. Procédé dans un dispositif mobile, comprenant les étapes suivantes :
la transmission (2-1) d'au moins une requête d'un type prédéfini ;
la réception (2-2) d'une indication selon laquelle une requête donnée de l'au moins une requête ne peut pas être réalisée car un nombre maximum de sessions de protocole Internet 'IP' est déjà établi pour le dispositif mobile ;
la définition (5-1) du nombre maximum de sessions IP prises en charge pour le dispositif mobile dans une zone de réseau donnée, comme étant le nombre de sessions IP établies pour le dispositif mobile à la réception de l'indication ; et
après avoir défini le nombre maximum de sessions IP prises en charge pour le dispositif mobile dans la zone de réseau donnée, la gestion active (5-2, 11-1) de l'attribution de sessions IP lorsqu'il existe moins de sessions IP que de fonctions de dispositif nécessitant des sessions IP, en se basant sur le nombre maximum de sessions IP prises en charge.

2. Procédé selon la revendication 1, dans lequel :
la transmission (2-1) de l'au moins une requête comprend la transmission (8-1) d'une pluralité de requêtes pour essayer d'établir des sessions IP simultanées ;
la réception (2-2) de l'indication comprend la réception (8-1) de réponses à la pluralité de requêtes ; et
la définition (5-1) du nombre maximum de sessions IP prises en charge comprend la définition (8-2) d'un nombre de sessions IP prises en charge par la zone de réseau donnée en fonction des tentatives d'établissement de sessions IP et des réponses à ces tentatives.

3. Procédé selon la revendication 2, dans lequel la définition (5-1) du nombre maximum de sessions IP prises en charge comprend en outre :
l'établissement d'une valeur par défaut pour le nombre maximum de sessions IP prises en charge en fonction des capacités du réseau sans fil.

4. Procédé selon l'une quelconque des revendications 1 à 3, dans lequel la définition (5-1) du nombre maximum de sessions IP prises en charge comprend en outre :
la réalisation d'un décompte du nombre de sessions IP établies simultanément.

5. Procédé selon la revendication 4, dans lequel la définition (5-1) du nombre maximum de sessions IP prises en charge comprend en outre :
à la réception d'une réponse définie à une tentative d'établissement d'une session IP, le réglage du nombre de sessions IP prises en charge par la zone de réseau donnée en fonction du décompte du nombre de sessions IP établies simultanément.

6. Procédé selon la revendication 5, dans lequel la réponse définie est l'une quelconque parmi :
une réponse de rejet d'activation de protocole de paquets de données 'PDP' avec un code de cause 26 ;
une réponse d'option de service provisoirement indisponible avec un code de cause 34 ;
une réponse de rejet d'activation de PDP avec un code de cause 38 ;
une réponse de rejet d'activation de PDP avec un code de cause 101 ;
une réponse demandant la désactivation d'un autre contexte existant ;
une réponse demandant le déblocage du support radio associé à un autre contexte existant ; ou
une réponse spécialement configurée pour indiquer qu'il ne reste plus de contextes PDP disponibles.

7. Procédé selon l'une quelconque des revendications 1 à 6, comprenant en outre les étapes suivantes :
pour les zones de réseau visitées auparavant, le maintien (9-1) des informations d'historique (200) indiquant le nombre maximum de sessions IP prises en charge par chaque zone de réseau ; et
après le déplacement dans une nouvelle zone de réseau, si cette nouvelle zone de réseau se trouve dans la liste des informations d'historique, la recherche (9-2) du nombre maximum de sessions IP prises en charge par la zone de réseau dans les informations d'historique et, dans le cas contraire, la définition du nombre maximum de sessions IP prises en charge par la nouvelle zone de réseau.

8. Procédé selon la revendication 7, dans lequel les informations d'historique (200) sont maintenues pour les zones de réseau à une granularité de l'un quelconque des éléments suivants : réseau mobile terrestre public 'PLMN' (208) ; PLMN et code de zone locale 'LAC' (210) ; ou code de zone d'acheminement 'RAC' et identifiant de contrôleur de réseau radio 'RNC Id' (212).

9. Procédé selon l'une quelconque des revendications 1 à 8, comprenant en outre :
avant de changer de zones de réseau depuis une première zone de réseau vers une deuxième zone de réseau dans laquelle un nombre moindre de sessions IP sont prises en charge par rapport à la première zone de réseau, la désactivation préventive, par le dispositif mobile, d'au moins une session IP sélectionnée.

10. Procédé selon l'une quelconque des revendications précédentes, dans lequel la gestion active (5-2, 11-1) de l'attribution des sessions IP comprend :
le classement par ordre de priorité des sessions IP et le maintien des sessions IP hautement prioritaires en amont des sessions IP moins prioritaires lorsque les sessions IP sont limitées par le nombre maximum de sessions IP pouvant être prises en charge pour le dispositif mobile.

11. Procédé selon l'une quelconque des revendications 1 à 9, dans lequel la gestion active (5-2, 11-1) de l'attribution des sessions IP comprend :
le classement par ordre de priorité des fonctions de dispositif et l'attribution des sessions IP par ordre de priorité.

12. Procédé selon l'une quelconque des revendications 1 à 9 ou 11, dans lequel la gestion active (5-2, 11-1) de l'attribution des sessions IP comprend :
après avoir changé de zones de réseau depuis une première zone de réseau vers une deuxième zone de réseau dans laquelle un nombre moindre de sessions IP sont prises en charge par rapport à la première zone de réseau, la définition de manière sélective des fonctions de dispositif auxquelles les sessions IP seront attribuées dans la deuxième zone de réseau, et l'établissement de celles-ci si elles n'ont pas déjà été établies et la désactivation d'autres si elles n'ont pas déjà été désactivées.

13. Procédé selon l'une quelconque des revendications 1 à 12, dans lequel la réception de l'indication comprend :
la réception (2-2) d'une réponse à la requête donnée, la réponse comprenant un code de cause indiquant que la requête donnée ne peut pas être réalisée car le nombre maximum de sessions IP est déjà établi pour le dispositif mobile.

14. Procédé selon la revendication 13, dans lequel le code de cause a une valeur de cause de 102 indiquant que le nombre maximum de sessions IP est déjà activé.

15. Procédé selon la revendication 13 ou la revendication 14, dans lequel :
la requête donnée est une requête d'activation de contexte PDP demandant l'établissement d'un nouveau contexte PDP, et la réponse est un rejet d'activation de contexte PDP rejetant la requête d'activation de contexte PDP ; ou
la requête donnée est une requête de service de contexte PDP demandant le service d'un contexte PDP existant, et la réponse est un rejet de service rejetant la requête de service de contexte PDP ; ou
la requête donnée est une requête d'activation de contexte PDP demandant l'établissement d'un nouveau contexte PDP, et la réponse est une requête de désactivation de PDP de terminal mobile 'MT' désactivant un contexte PDP existant ; ou
la requête donnée est une requête de mise à jour de zone d'acheminement 'RAU' demandant le passage à une nouvelle zone d'acheminement, et la réponse est une requête de désactivation PDP de MT désactivant un contexte PDP existant.

16. Procédé selon l'une quelconque des revendications 1 à 15, comprenant en outre :
l'acceptation (6-1) d'une requête provenant d'une application établissant une nouvelle session IP ;
dans lequel la gestion active (5-2, 11-1) de l'attribution des sessions IP comprend la définition (6-2) de la requête ou non de la nouvelle session IP auprès du réseau sans fil en fonction du nombre maximum de sessions IP prises en charge.

17. Procédé selon l'une quelconque des revendications 1 à 15, comprenant en outre :
le classement par ordre de priorité (7-1) des sessions IP ;
dans lequel la gestion active (5-2, 11-1) de l'attribution des sessions IP comprend le maintien (7-2) des sessions IP hautement prioritaires en amont des sessions IP moins prioritaires lorsque les sessions IP sont limitées par le nombre maximum de sessions IP prises en charge.

18. Procédé selon l'une quelconque des revendications 1 à 17, dans lequel chaque session IP fait partie d'un contexte PDP respectif.

19. Support lisible par ordinateur (13) stockant des instructions pouvant être exécutées par un processeur (12) d'un dispositif informatique afin de mettre en oeuvre toutes les étapes du procédé selon l'une quelconque des revendications 1 à 18.

20. Dispositif mobile (10) comprenant :
une radio sans fil (11) pouvant communiquer avec un réseau sans fil ; et
une fonction de gestion de session IP (13) pouvant :
transmettre (2-1) au moins une requête d'un type prédéfini ;
recevoir (2-2) une indication selon laquelle une requête de l'au moins une requête ne peut pas être réalisée car un nombre maximum de sessions IP est déjà établi pour le dispositif mobile ;
définir (5-1) le nombre maximum de sessions IP prises en charge pour le dispositif mobile dans une zone de réseau donnée, comme étant le nombre de sessions IP établies pour le dispositif mobile à la réception de l'indication ; et
après avoir défini le nombre maximum de sessions IP prises en charge pour le dispositif mobile dans la zone de réseau donnée, gérer activement (5-2, 11-1) l'attribution de sessions IP lorsqu'il existe moins de sessions IP que de fonctions de dispositif nécessitant des sessions IP, en se basant sur le nombre maximum de sessions IP prises en charge.

21. Procédé dans un réseau sans fil, comprenant les étapes suivantes :
à la réception d'une requête d'un type prédéfini provenant d'un dispositif mobile résidant dans une zone de réseau donnée :
la définition (12-1) de l'existence ou non d'un nombre maximum de sessions IP déjà établi pour le dispositif mobile pour la zone de réseau donnée ; et
si le nombre maximum de sessions IP est déjà établi, la transmission (12-2) au dispositif mobile d'une réponse indiquant que la requête ne peut pas être réalisée car le nombre maximum de sessions IP est déjà établi.

22. Procédé selon la revendication 21, dans lequel la réponse comprend un code de cause, le code de cause indiquant que la requête ne peut pas être réalisée car le nombre maximum de sessions IP est déjà établi.

23. Procédé selon la revendication 22, dans lequel le code de cause a une valeur de cause de 102 indiquant que le nombre maximum de sessions IP est déjà activé.

24. Procédé selon l'une quelconque des revendications 21 à 23, dans lequel :
la requête du type prédéfini est une requête d'activation de session IP demandant l'établissement d'une nouvelle session IP, et la réponse est un rejet de session IP rejetant la requête d'activation de session IP ; ou
la requête du type prédéfini est une requête de service de session IP demandant le service d'une session IP existante, et la réponse est un rejet de service IP rejetant la requête de service de session IP ; ou
la requête du type prédéfini est une requête d'activation de contexte PDP demandant l'établissement d'un nouveau contexte PDP, et la réponse est une requête de désactivation de PDP de terminal mobile 'MT' désactivant un contexte PDP existant ; ou
la requête du type prédéfini est une requête de mise à jour de zone d'acheminement 'RAU' demandant le passage à une nouvelle zone d'acheminement, et la réponse est une requête de désactivation de PDP de MT désactivant un contexte PDP existant.

25. Procédé selon l'une quelconque des revendications 21 à 24, dans lequel chaque session IP fait partie d'un contexte PDP respectif.

26. Support lisible par ordinateur (51) stockant des instructions pouvant être exécutées par un processeur (52) d'un dispositif ou système informatique afin de mettre en oeuvre toutes les étapes du procédé selon l'une quelconque des revendications 21 à 25.

27. Réseau sans fil (100) comprenant une fonction de session IP (51) pouvant :
à la réception d'une requête d'un type prédéfini provenant d'un dispositif mobile résidant dans une zone de réseau donnée :
définir (12-1) l'existence ou non d'un nombre maximum de sessions IP déjà établi pour le dispositif mobile pour la zone de réseau donnée ; et
si le nombre maximum de sessions IP est déjà établi, transmettre (12-2) au dispositif mobile une réponse indiquant que la requête ne peut pas être réalisée car le nombre maximum de sessions IP est déjà établi.
